# EUROPÄISCHE PATENTANMELDUNG

(11) **EP 4 273 513 A1**
(43) Veröffentlichungstag der Anmeldung: **08.11.2023**
(21) Anmeldenummer: 22171522.0
(22) Anmeldetag: 04.05.2022
(51) Int. Cl.: G01F 1/667, G01F 1/66, G01F 15/00, G01F 15/18

(54) **SYSTEM ZUR ERFASSUNG EINER MESSGRÖSSE DES VON EINER FLUIDFÜHRENDEN LEITUNG GEFÜHRTEN FLUIDS, DURCHFLUSSEINRICHTUNG ZUM ANORDNEN AN EINER FLUIDFÜHRENDEN LEITUNG UND ZUM ANBRINGEN EINER DURCHFLUSSMESSEINRICHTUNG, VERWENDUNG EINER DURCHFLUSSEINRICHTUNG**

(71) Anmelder: Sartorius Stedim Biotech GmbH, 37079 Göttingen (DE)
(72) Erfinder: BODE, Matthias, 37434 Krebeck-Renshausen (DE); AUE, Norbert, 37120 Bovenden (DE); GÖTEMANN, Sina, 37120 Bovenden (DE); SANTOS DE MATOS FORTUNA, Ana Raquel, 37085 Göttingen (DE); FIRNEISEN, Svenja, 37124 Rosdorf (DE)
(74) Vertreter: Müller-Boré & Partner Patentanwälte PartG mbB

(57) **Zusammenfassung**

Ein Aspekt betrifft ein System zur Erfassung einer Messgröße des von einer fluidführenden Leitung geführten Fluids, wobei das System aufweist:
- eine Durchflussmesseinrichtung, insbesondere eine Ultraschall-Durchflussmesseinrichtung, zur Erfassung der Messgröße,
- eine Durchflusseinrichtung (10) zum Anordnen an der fluidführenden Leitung und zum Anbringen der Durchflussmesseinrichtung zur Erfassung der Messgröße des von der Leitung geführten Fluids, wobei die Durchflusseinrichtung aufweist:
- einen ersten und einen zweiten Anschluss (12, 14), mittels derer die Durchflusseinrichtung (10) mit der fluidführenden Leitung verbindbar ist,
- einen zwischen dem ersten Anschluss (12) und dem zweiten Anschluss (14) angeordneten Messbereich (16), der mit der Durchflussmesseinrichtung zum Erfassen der Messgröße koppelbar ist, wobei der erste Anschluss (12), der Messbereich (16) und der zweite Anschluss (14) eine Durchflussstrecke (A) für das Fluid durch die Durchflusseinrichtung (10) festlegen,
wobei der Messbereich (16) mindestens zwei Kontaktflächen (20), die sich zumindest abschnittsweise entlang der Durchflussstrecke (A) erstrecken, zum Kontaktieren der Durchflussmesseinrichtung aufweist,
wobei die mindestens zwei Kontaktflächen (20) dazu ausgelegt sind, bei Einwirken eines Anpressdrucks ein Kopplungsmittel abzusondern, und
wobei die Durchflussmesseinrichtung derart ausgebildet ist, dass durch Kopplung der Durchflussmesseinrichtung mit dem Messbereich (16), die Durchflussmesseinrichtung mindestens den Anpressdruck auf die mindestens zwei Kontaktflächen (20) ausübt. Ferner betrifft die Erfindung eine Durchflusseinrichtung und eine Verwendung derselben.

## Beschreibung

Die vorliegende Erfindung betrifft ein System zur Erfassung einer Messgröße des von einer fluidführenden Leitung geführten Fluids, eine Durchflusseinrichtung zum Anordnen an einer fluidführenden Leitung und zum Anbringen einer Durchflussmesseinrichtung sowie die Verwendung einer Durchflusseinrichtung.

Bei einer Vielzahl von Verfahren in der Automation industrieller oder labortechnischer Prozesse werden Durchflussmessungen in Leitungs-, Rohr- und Schlauchsystemen zur Kontrolle der Prozesse durchgeführt. Für Durchflussmessungen kommen dabei unter anderem In-Line-Durchflussmessvorrichtungen und Clamp-On-Durchflussmessvorrichtungen zum Einsatz. Bei In-Line- Durchflussmessvorrichtungen werden Messsensoren im Strömungsprofil des zu messenden Fluids bzw. Mediums angebracht, wohingegen Clamp-On-Durchflussmessvorrichtungen von außen auf eine Leitung, ein Rohr oder einen Schlauch, welche das Fluid bzw. Medium führen, aufgesetzt und festgeklemmt werden.

Ferner sind Clamp-On-Durchflussmessvorrichtungen bekannt, bei denen eine Durchflusseinrichtung in einem das Fluid bzw. Medium führenden Kunststoffschlauch eingebaut wird, so dass das Fluid bzw. Medium die Durchflusseinrichtung durchströmt. An diese Durchflusseinrichtung wird eine Durchflussmessvorrichtung befestigt, die ein geeignetes Eingabesignal, bspw. ein Ultraschallsignal, in die in dem Kunststoffschlauch eingebaute Durchflusseinrichtung eingibt und anhand eines über die Durchflusseinrichtung erhaltenen Ausgabesignals, welches auf dem Eingabesignal basiert, die Durchflussmessung durchführt.

Der vorliegenden Erfindung liegt die Aufgabe zugrunde, ein System zur Erfassung einer Messgröße des von einer fluidführenden Leitung geführten Fluids bereitzustellen, welches es ermöglicht, die Genauigkeit einer Durchflussmessung zu verbessern. Ferner ist es Aufgabe der Erfindung eine Durchflusseinrichtung zum Anordnen an einer fluidführenden Leitung und zum Anbringen einer Durchflussmesseinrichtung sowie eine Verwendung der Durchflusseinrichtung vorzuschlagen, welche eine möglichst genaue Erfassung der Messgröße ermöglichen.

Diese Aufgabe wird durch die Gegenstände der unabhängigen Ansprüche gelöst. Bevorzugte Ausführungsformen sind in den abhängigen Ansprüchen gelöst.

Ein erster Aspekt betrifft ein System zur Erfassung einer Messgröße des von einer fluidführenden Leitung geführten Fluids, wobei das System aufweist:
- eine Durchflussmesseinrichtung, insbesondere eine Ultraschall-Durchflussmesseinrichtung, zur Erfassung der Messgröße,
- eine Durchflusseinrichtung zum Anordnen an der fluidführenden Leitung und zum Anbringen der Durchflussmesseinrichtung zur Erfassung der Messgröße des von der Leitung geführten Fluids, wobei die Durchflusseinrichtung aufweist:
- einen ersten und einen zweiten Anschluss, mittels derer die Durchflusseinrichtung mit der fluidführenden Leitung verbindbar ist,
- einen zwischen dem ersten Anschluss und dem zweiten Anschluss angeordneten Messbereich, der mit der Durchflussmesseinrichtung zum Erfassen der Messgröße koppelbar ist, wobei der erste Anschluss, der Messbereich und der zweite Anschluss eine Durchflussstrecke für das Fluid durch die Durchflusseinrichtung festlegen,
   wobei der Messbereich mindestens zwei Kontaktflächen, die sich zumindest abschnittsweise entlang der Durchflussstrecke erstrecken, zum Kontaktieren der Durchflussmesseinrichtung aufweist,
   wobei die mindestens zwei Kontaktflächen dazu ausgelegt sind, bei Einwirken eines Anpressdrucks ein Kopplungsmittel abzusondern, und
   wobei die Durchflussmesseinrichtung derart ausgebildet ist, dass durch Kopplung der Durchflussmesseinrichtung mit dem Messbereich, die Durchflussmesseinrichtung mindestens den Anpressdruck auf die mindestens zwei Kontaktflächen ausübt.

Vorteilhafterweise ermöglicht das Absondern des Kopplungsmittels eine verbesserte Signalübertragung zwischen der Durchflussmesseinrichtung und den Kontaktflächen, was zu einer besseren Erfassung der Messgröße führt. Insbesondere bei einer Ultraschall-Durchflussmesseinrichtung, bei der die Durchflussmesseinrichtung ein Eingabesignal, bevorzugt ein Ultraschallsignal, über die Kontaktflächen in den Messbereich einkoppelt, und ein auf dem Eingabesignal basierendes Ausgabesignal empfängt, führt das Kopplungsmittel zu einer besseren Signalübertragung im Signalweg. Insbesondere reduziert das Kopplungsmittel, welches vorzugsweise flüssig ist, Gasphasen im Signalweg. Gasphasen im Signalweg entstehen insbesondere durch Hohlräume, die mit einem gasförmigen Fluid, beispielsweise Umgebungsluft gefüllt sind, und zwischen den Kontaktflächen und der Durchflussmesseinrichtung liegen. Durch das Absondern des Kontaktmittels kann das gasförmige Fluid durch das Kopplungsmittel verdrängt werden, sodass nunmehr eine flüssige Phase im Signalweg vorliegt, die die Signalübertragung verbessert.

Insbesondere können der erste und zweite Anschluss sowie der zwischen dem ersten und zweiten Anschluss angeordnete Messbereich einen Kanal bzw. Strömungskanal aufweisen, der die Durchflussstrecke definiert und durch welchen das Fluid bzw. Medium strömt. Als fluidführende Leitung, welche mit dem ersten und zweiten Anschluss verbindbar sind, können beispielhaft Rohre oder Schläuche vorgesehen sein, welche beispielsweise aus Kunststoff gefertigt sind. Beispielsweise kann zum Anbringen der Durchflusseinrichtung an der Leitung vorgesehen sein, die Leitung zu trennen, so dass ein erstes offenes Ende der Leitung mit dem ersten Anschluss verbunden wird und ein zweites offenes Ende der Leitung mit dem zweiten Anschluss verbunden wird, so dass die Durchflusseinrichtung das erste offene Ende und das zweite offene Ende der Leitung miteinander verbindet.

Vorzugsweise ist die Durchflussstrecke bzw. der Kanal länglich ausgebildet und verläuft im Wesentlichen geradlinig. Insbesondere kann vorgesehen sein, dass die Durchflusstrecke nicht gebogen oder gekrümmt ist, beispielsweise keinen 90°-Knick aufweist, so dass die Haupt-Durchflussrichtung des Fluids bzw. des Mediums durch die Durchflusseinrichtung hindurch im Wesentlichen gleichbleibend ist.

Das Fluid bzw. Medium kann insbesondere flüssig sein, wobei das Fluid bzw. Medium auch feste Bestandteile, wie Partikel oder Zellbestandteile, aufweisen kann. Allerdings ist die Erfindung nicht auf Fluide in flüssiger Form beschränkt.

Die Durchflusseinrichtung und/oder die Durchflussmesseinrichtung werden insbesondere bei der Überwachung industrieller und/oder labortechnischer Prozesse eingesetzt und dienen der Überwachung der Prozesse basierend auf einer Durchflussmessung eines Fluids oder Mediums, welche durch Leitungs-, Rohr- und/oder Schlauchsysteme strömt. Die Durchflusseinrichtung kann dabei insbesondere als Single-Use (SU) Vorrichtung verwendet werden.

Vorzugsweise kann die Durchflussmesseinrichtung ein Eingabesignal, bspw. ein Ultraschallsignal, in den Messbereich, bevorzugt über eine Kontaktfläche der mindestens zwei Kontaktflächen, einkoppeln und über den Messbereich, bevorzugt über ein andere Kontaktfläche der mindestens zwei Kontaktflächen, ein auf dem Eingabesignal basierendes Ausgabesignal empfangen. Anhand des Eingabe- und Ausgabesignals kann die Durchflussmesseinrichtung eine für die Durchflussmessung, bspw. eine Volumendurchfluss- oder Massendurchfluss-Messung, relevante Messgröße erfassen.

Vorzugsweise kann vorgesehen sein, dass die mindesten zwei Kontaktflächen ein Elastomer und/oder thermoplastisches Elastomer umfassen, wobei optional das thermoplastische Elastomer aus der Gruppe, bestehend aus Polyetherblockamiden (thermoplastische Polyether Block Amide (TPA)), (Co)Polyestern (thermoplastische Copolyester Elastomere (TPC)), Polyurethanen (thermoplastische Polyurethan Elastomere (TPU)), Polyolefinen (thermoplastische Polyolefine (TPO)), vernetzten thermoplastischen Elastomeren (thermoplastische Elastomere aus Thermoplasten und vulkanisiertem Elastomer (TPV)), Styrol-Blockcopolymeren (thermoplastische Elastomere basierend auf Styrol-Blockcopolymeren (TPS)) und Silikonen, einzeln oder in Kombination ausgewählt ist. Gemäß einer bevorzugten Ausführungsform umfassen die mindestens zwei Kontaktflächen ein Styrol-Blockcopolymer (TPS).

Vorteilhafterweise ermöglichen die vorgenannten Materialien, dass die Kontaktflächen bei einem auf die Kontaktfläche wirkenden Anpressdruck, der mittels der Durchflussmesseinrichtung auf die Kontaktflächen ausgeübt wird, das Kopplungsmittel absondern.

Gemäß der vorliegenden Erfindung können die Kontaktflächen als eine Beschichtung auf einem Grund- bzw. Messkörper ausgebildet sein. Eine solche Beschichtung kann beispielsweise als Umspritzung des Grundkörpers ausgebildet sein. Gemäß einer bevorzugten Ausführungsform umfasst der Grundkörper Polybutylenterephthalat. Die Beschichtung kann erfindungsgemäß sowohl massiv, porös als auch schwammartig ausgebildet sein, wobei die massive Ausführungsform bevorzugt ist.

Vorzugsweise ist vorgesehen, dass der von der Durchflussmesseinrichtung auf die Kontaktfläche ausgeübte Anpressdruck mindestens etwa 0,7 N/mm², bevorzugt mindestens etwa 1 N/mm² und besonders bevorzugt mindestens etwa 1,3 N/mm² beträgt. Vorteilhafterweise erlauben die Anpressdrücke, dass die Kontaktflächen das Kopplungsmittel absondern. Ferner können höherer Anpressdrücke zu einer zeitlich schnelleren Absonderung des Kopplungsmittels führen. Der Anpressdruck muss nicht vollflächig auf die Kontaktfläche(n) ausgeübt werden. Insbesondere kann der Anpressdruck punktuell oder abschnittsweise auf die Kontaktfläche(n) ausgeübt werden.

Ferner kann vorgesehen sein, dass die mindesten zwei Kontaktflächen, welche ein Styrol-Blockcopolymer aufweisen, einer Gamma oder Röntgen-Bestrahlung ausgesetzt wurden. Vorteilhafterweise ermöglicht die Gamma oder Röntgen-Bestrahlung, dass der notwendige Anpressdruck, bei dem das Kopplungsmittel durch die Kontaktflächen abgesondert wird, reduziert werden kann.

Vorzugsweise kann vorgesehen sein, dass die Durchflussmesseinrichtung eine Aufnahme für den Messbereich aufweist, wobei in einem geöffneten Zustand der Durchflussmesseinrichtung der Messbereich von der Aufnahme aufnehmbar ist und/oder von der Aufnahme entnehmbar ist, und wobei in einem geschlossenen Zustand der Durchflussmesseinrichtung der Messbereich zumindest abschnittsweise entlang der Durchflussstrecke von der Durchflussmesseinrichtung umschlossen ist. Des Weiteren kann vorgesehen sein, dass im geschlossenen Zustand der Durchflussmesseinrichtung, die Durchflussmesseinrichtung den Anpressdruck zumindest abschnittsweise auf die mindestens zwei Kontaktflächen ausübt. Insbesondere kann die Durchflussmesseinrichtung eine Sensorik, beispielsweise einen Ultraschallwandler, aufweisen, der in der Aufnahme angeordnet ist, wobei der Anpressdruck insbesondere auf den oder die Bereiche der mindestens zwei Kontaktflächen ausgeübt wird, welcher oder welche im Signalweg der Sensorik liegen. Vorzugsweise kann der Anpressdruck im Wesentlichen halbflächig auf die mindestens zwei Kontaktflächen ausgeübt werden. In einer weiteren bevorzugten Ausführungsform kann der Anpressdruck im Wesentlichen vollflächig auf die mindestens zwei Kontaktflächen ausgeübt werden.

Vorzugsweise können die Kontaktflächen außenseitig an dem Messbereich angeordnet sein, wobei der Normalenvektor der Kontaktflächen bevorzugt im Wesentlichen senkrecht zur Längsachse der Durchflusseinrichtung bzw. Haupt-Durchflussrichtung des Fluids durch die Durchflusseinrichtung verläuft. Bevorzugt sind die mindestens zwei Kontaktflächen bezogen auf die Durchflussstrecke gegenüberliegend angeordnet.

Vorzugsweise kann vorgesehen sein, dass der Messbereich quer zur Durchflussstrecke gesehen ein Übermaß gegenüber der Aufnahme der Durchflussmesseinrichtung im geschlossenen Zustand der Durchflussmesseinrichtung aufweist. Vorteilhafterweise führt das Übermaß des Messbereichs dazu, dass durch Schließen der Durchflussmesseinrichtung die Aufnahme der Durchflussmesseinrichtung einen entsprechenden Anpressdruck auf die Kontaktflächen ausüben kann. Beispielsweise kann die Querschnittsfläche der Aufnahme der Durchflussmesseinrichtung für den Messbereich kleiner sein als die Querschnittsfläche des Messbereichs. Alternativ oder optional kann der Abstand der Außenseiten der mindestens zwei Kontaktflächen größer sein als der entsprechende Abstand der Innenseiten der Aufnahme der Durchflussmesseinrichtung. Das Übermaß kann insbesondere in einem Bereich von 0,5% bis 2%, gesehen auf die Querschnittsfläche des Messbereichs oder gesehen auf den Abstand der Außenseiten der mindestens zwei Kontaktflächen, sein. Vorzugsweiße kann das Übermaß über die gesamte Länge der Kontaktflächen bestehen.

Vorzugsweise kann vorgesehen sein, dass der Messbereich sechs Kontaktflächen aufweist, die sich zumindest abschnittsweise entlang der Durchflussstrecke erstrecken, wobei die sechs Kontaktflächen derart zueinander angeordnet sind, dass die Durchflusstrecke einen im Wesentlichen hexagonalen Querschnitt, bevorzugt gleichseitigen hexagonalen Querschnitt, aufweist.

Vorzugsweise kann vorgesehen sein, dass die Aufnahme im geschlossenen Zustand der Durchflussmesseinrichtung einen im Wesentlichen hexagonalen Querschnitt, bevorzugt gleichseitigen hexagonalen Querschnitt, aufweist. Insbesondere kann die Aufnahme komplementär zu dem Messbereich bzw. den Kontaktflächen ausgebildet sein.

Vorzugsweise kann vorgesehen sein, dass der Messbereich einen bevorzugt monolithisch ausgebildeten Messkörper aufweist, an dem die Kontaktflächen angebracht bzw. angeordnet sind. Insbesondere kann der Messkörper mit den Kontaktflächen beschichtet sein. Der Messkörper kann ferner einen Kanal aufweisen, der einen Teil der Durchflussstrecke bildet. Insbesondere kann der Messkörper zumindest abschnittsweise entlang der Haupt-Durchflussrichtung vollumfänglich von den Kontaktflächen, insbesondere den sechs Kontaktflächen, umschlossen sein. Die Kontaktflächen können insbesondere flach ausgebildet sein, d.h., die Länge und Breite der Kontaktflächen ist wesentlich größer als deren Dicke. Die Kontaktflächen können insbesondere eine minimale Dicke von etwa 1,2 mm und eine maximale Dicke von etwa 1,5 mm aufweisen. Ferner können die Kontaktflächen jeweils eine Fläche von ungefähr 30 mm² bis 200 mm², bevorzugt von ungefähr 40 mm² bis 160 mm², aufweisen.

Vorzugsweise kann vorgesehen sein, dass der Messkörper bei Einwirkung des Anpressdrucks im Wesentlichen formstabil ist. Vorteilhafterweise ermöglicht die formstabile Ausgestaltung des Messkörpers, dass der Messkörper aufgrund des Anpressdrucks nicht verformt wird, und der auf die Kontaktflächen wirkende Anpressdruck aufrechterhalten werden kann. Der Messkörper kann insbesondere aus einem thermoplastischen Kunststoff, insbesondere aus Polybutylenterephthalat (PBT), hergestellt sein. Der Messkörper kann bevorzugt durch ein Spritzgussverfahren hergestellt werden, wofür sich Polybutylenterephthalat als Material für den Messkörper besonders gut eignet.

Vorzugsweise kann vorgesehen sein, dass das Kopplungsmittel einen flüssigen oder sich unter Druck verflüssigenden äußeren Weichmacher und/oder Extender umfasst, wobei optional der flüssige oder sich unter Druck verflüssigende äußere Weichmacher und/oder Extender ölartig ist. Unter ölartig wird eine organische Flüssigkeit, die sich nicht mit Wasser mischt, verstanden. Insbesondere kann das Kopplungsmittel aus der Gruppe, bestehend aus Bis(2-ethylhexyl)phthalat, Mesamoll, Mesamoll II, Paraffin/Mineralöl, Polysiloxan bzw. Silikonöl, einzeln oder in Kombination ausgewählt sein. Gemäß einer bevorzugten Ausführungsform wird aus dem erfindungsgemäßen thermoplastischen Elastomer (TPE) Weißöl bzw. Paraffin extrahiert bzw. abgesondert.

Vorzugsweise kann vorgesehen sein, dass die Durchflussmesseinrichtung ein erstes Gehäuseteil und ein zweites Gehäuseteil, welches relativ zu dem ersten Gehäuseteil bewegbar ist, aufweist, und wobei das erste und zweite Gehäuseteil zusammen die Aufnahme für den Messbereich bzw. Messkörper bilden. Bevorzugt können das erste Gehäuseteil und/oder zweite Gehäuseteil eine Ausnehmung aufweisen, die die Aufnahme bilden.

Der erste Anschluss, der zweite Anschluss und der Messbereich bzw. Messkörper können einteilig ausgebildet sind, bspw. als Spritzgussteil. Alternativ kann vorgesehen sein, dass der erste Anschluss und der zweite Anschluss lösbar mit dem Messbereich verbindbar sind. Dabei kann die Durchflusseinrichtung Sicherungselemente aufweisen, mit denen der erste Anschluss und der zweite Anschluss lösbar mit dem Messbereich verbindbar bzw. an diesem sicherbar sind.

Ferner können der erste Anschluss und der zweite Anschluss dazu ausgebildet sein, dass die Leitung selbstsichernd an den Anschlüssen befestigbar ist. So kann der erste und zweite Anschluss jeweils als Schlaucholive bzw. Schlauchstachel ausgebildet sein, um die Leitung an dem ersten und/oder zweiten Anschluss zu befestigen.

Ein zweiter Aspekt betrifft eine Durchflusseinrichtung zum Anordnen an einer fluidführenden Leitung und zum Anbringen einer Durchflussmesseinrichtung, insbesondere einer Ultraschall-Durchflussmesseinrichtung, zur Erfassung einer Messgröße des von der Leitung geführten Fluids, wobei die Durchflusseinrichtung aufweist:
- einen ersten und einen zweiten Anschluss, mittels derer die Durchflusseinrichtung mit der fluidführenden Leitung verbindbar ist,
- einen zwischen dem ersten Anschluss und dem zweiten Anschluss angeordneten Messbereich, der mit der Durchflussmesseinrichtung zum Erfassen der Messgröße koppelbar ist, wobei der erste Anschluss, der Messbereich und der zweite Anschluss eine Durchflussstrecke für das Fluid durch die Durchflusseinrichtung festlegen,
   wobei der Messbereich mindestens zwei Kontaktflächen, die sich zumindest abschnittsweise entlang der Durchflussstrecke erstrecken, zum Kontaktieren der Durchflussmesseinrichtung aufweist,
   wobei die mindestens zwei Kontaktflächen dazu ausgelegt sind, bei Einwirken eines Anpressdrucks ein Kopplungsmittel abzusondern.

Die Durchflusseinrichtung kann ferner gemäß dem ersten Aspekt fortgebildet sein.

Ein dritter Aspekt betrifft eine Verwendung einer Durchflusseinrichtung nach dem zweiten Aspekt zur Erfassung einer Messgröße des von einer fluidführenden Leitung geführten Fluids, wobei vorgesehen ist:
- Anordnen der Durchflusseinrichtung an der Leitung;
- Anbringen einer Durchflussmesseinrichtung an dem Messbereich, wobei durch das Anbringen der Durchflussmesseinrichtung an dem Messbereich, die Durchflussmesseinrichtung mindestens den Anpressdruck auf die Kontaktflächen ausübt.

Ferner kann die Verwendung die Durchführung einer Durchflussmessung mittels der der Durchflussmesseinrichtung vorsehen.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: eine Draufsicht einer Durchflusseinrichtung zum Anordnen an einer fluidführenden Leitung und zum Anbringen einer Durchflussmesseinrichtung, und
- Figur 2: eine Querschnittsansicht der Durchflusseinrichtung.

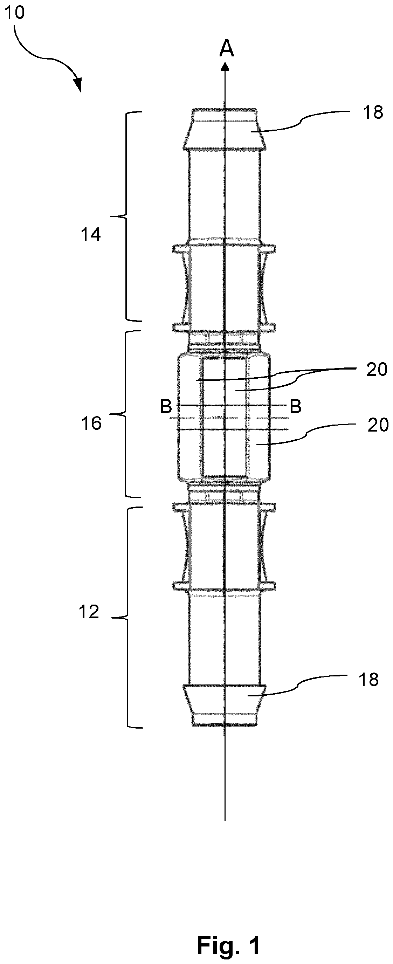

**Figur 1** zeigt eine Draufsicht einer Durchflusseinrichtung 10 zum Anordnen an einer fluidführenden Leitung (nicht dargestellt) und zum Anbringen einer Durchflussmesseinrichtung (nicht dargestellt). Die Durchflusseinrichtung 10 weist einen ersten und zweiten Anschluss 12/14 auf, mit dem die Durchflusseinrichtung 10 an einer fluidführenden Leitung bzw. zwischen zwei fluidführenden Leitungen angeordnet werden kann. Beispielsweise kann der erste Anschluss 12 mit einer fluidführenden Leitung, wie einem Kunststoffschlauch, verbunden werden, wobei mittels der Leitung der Durchflusseinrichtung 10 ein Fluid bzw. Medium zugeführt werden kann. Ferner kann der zweite Anschluss 14 ebenfalls mit einer fluidführenden Leitung verbunden werden, in die das Fluid bzw. Medium aus der Durchflusseinrichtung 10 über den zweiten Anschluss 14 einströmt. Insbesondere kann vorgesehen sein, dass das Fluid in flüssiger Form vorliegt, wobei auch feste Partikel, wie beispielsweise Zellteile in dem Fluid vorhanden sein können. Der erste und zweite Anschluss 12/14 können jeweils derart ausgebildet sein, dass die Leitung selbstsichernd an den Anschlüssen 12/14 befestigbar ist. Beispielsweise können der erste und zweite Anschluss 12/14 jeweils als Schlaucholive bzw. Schlauchstachel 18 ausgebildet sein.

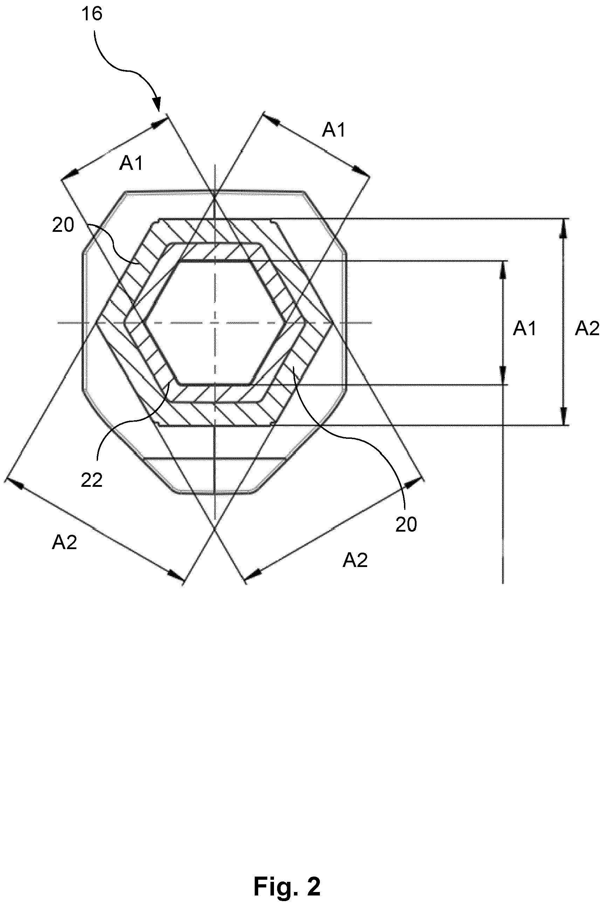

Zwischen dem ersten und zweiten Anschluss 12/14 ist ein Messbereich 16 angeordnet, an welchem die Durchflussmesseinrichtung (nicht gezeigt) angeordnet werden kann bzw. mit dem die Durchflussmesseinrichtung koppelbar ist. Der erste Anschluss 12, der Messbereich 16 und der zweite Anschluss 14 legen dabei eine Durchflussstrecke A fest, durch welche ein Fluid bzw. Medium durch die Durchflusseinrichtung 10 hindurchströmen kann. Der erste Anschluss 12, der Messbereich 16 und der zweite Anschluss 14 können insbesondere einen Kanal bzw. Strömungskanal 24 (siehe Figur 2) ausbilden, der die Durchflussstrecke A festlegt. Die Durchflussstrecke A bzw. der Kanal 24 können insbesondere länglich ausgebildet sein. Vorzugsweise verläuft die Durchflussstrecke A im Wesentlichen geradlinig, sodass die Haupt-Durchflussrichtung A des Fluids bzw. Mediums durch die Durchflusseinrichtung 10 im Wesentlichen gleichbleibend ist.

In der in Figur 1 dargestellten Ausführungsform ist die Durchflusseinrichtung 10 einstückig ausgebildet. Die Durchflusseinrichtung 10 kann aber auch modular aufgebaut sein, wobei der erste und zweite Anschluss 12/14 jeweils als Hohlkörper ausgebildet sind und lösbar mit dem Messbereich 16 verbindbar sind. Zur Befestigung bzw. Sicherung des ersten bzw. zweiten Anschlusses 12/14 an dem Messbereich 16 können Sicherungselemente vorgesehen sein. Beispielsweise kann jeder Anschluss 12/14 mit einer Überwurfmutter an dem Messbereich 16 befestigt werden.

Der Messbereich 16 weist einen Messkörper 22 auf, auf den mindestens zwei Kontaktflächen 20 aufgebracht bzw. angebracht sind, wobei die Kontaktflächen 20 nach außen weisen. Insbesondere kann der Normalenvektor jeder Kontaktfläche 20 im Wesentlichen senkrecht zur Haupt-Durchflussrichtung A liegen bzw. senkrecht zur Längsrichtung des Messkörpers 22 liegen. Ferner können sich die mindestens zwei Kontaktflächen 20 zumindest abschnittsweise entlang der Durchflussstrecke A bzw. Haupt-Durchflussrichtung A erstrecken. Bevorzugt sind die Kontaktflächen 20 bezogen auf die Durchflussstrecke A gegenüberliegend angeordnet und verlaufen insbesondere parallel zueinander. In der in Figur 1 dargestellten Ausführungsform weist der Messbereich 16 sechs Kontaktflächen 20 auf, welche in Richtung der Haupt-Durchflussrichtung A gesehen hexagonal angeordnet sind (siehe Fig. 2). Insbesondere bilden jeweils zwei gegenüberliegende Kontaktflächen 20 ein Kontaktflächenpaar, sodass der Messbereich 16 drei Kontaktflächenpaare aufweist. Ferner kann der Messkörper 22 monolithisch ausgebildet sein und/oder die Durchflussstrecke A entlang der Haupt-Durchflussrichtung zumindest abschnittsweise umschließen.

Die Durchflusseinrichtung 10 kann insbesondere mit einer Durchflussmesseinrichtung (nicht gezeigt) gekoppelt werden. Vorzugsweise kann vorgesehen sein, dass die Durchflussmesseinrichtung ein erstes Gehäuseteil und ein zweites Gehäuseteil, welches relativ zu dem ersten Gehäuseteil bewegbar ist, aufweist, und wobei das erste und zweite Gehäuseteil eine Aufnahme bilden, mit der der Messbereich 22 koppelbar ist. Insbesondere können das erste und zweite Gehäuseteil jeweils eine Ausnehmung aufweisen, die zusammen die Aufnahme für den Messbereich 16 bzw. Messkörper 22 bilden. Im geschlossenen Zustand der Durchflussmesseinrichtung kontaktiert die Aufnahme der Durchflussmesseinrichtung die Kontaktflächen 20, sodass über eine in der Aufnahme vorgesehene Sensorik, beispielsweise ein Ultraschallwandler, ein Eingabesignal, beispielsweise ein Ultraschallsignal, über die Kontaktflächen 20 in den Messbereich 16 eingegeben werden kann. Ferner kann die Sensorik über die Kontaktflächen 20 ein auf dem Eingabesignal basierendes Ausgabesignal empfangen und basierend auf einem Vergleich des Ein- und Ausgabesignals eine fluidbezogene Messgröße bestimmen.

**Figur 2** zeigt eine Querschnittsansicht des Messbereichs 16 entlang der in Figur 1 gezeigten BB Linie. Der Messbereich 16 bzw. der Messkörper 22 kann insbesondere als länglicher Hohlkörper ausgebildet sein, dessen Längsachse im Wesentlichen parallel zu Haupt-Durchflussrichtung A liegt. Dabei bildet der Messkörper 22 einen Teil des Kanals 24 und somit einen Teil der Durchflussstrecke A aus, durch welche das Fluid bzw. Medium strömt. Der Kanal 24 kann ferner von den Kontaktflächen 20 zumindest abschnittsweise entlang der Haupt-Durchflussrichtung A umschlossen werden.

Ferner kann die Durchflussstrecke A im Bereich des Messbereichs 16 bzw. der Kontaktflächen 20 einen im Wesentlichen hexagonalen Querschnitt aufweisen. Die Erfindung ist allerdings nicht auf einen hexagonalen Querschnitt beschränkt. Beispielsweise kann der Querschnitt der Durchflussstrecke A im Bereich des Messbereichs 16 bzw. der Kontaktflächen 20 im Wesentlichen rechteckförmig, insbesondere quadratisch, sein. Dazu kann der Messbereich lediglich vier Kontaktflächen 20 aufweisen, welche im Querschnitt gesehen entsprechend rechteckförmig bzw. quadratisch angeordnet sind.

Des Weiteren sind die Kontaktflächen 20 vorzugsweise rechteckförmig ausgebildet, wobei die Längsrichtung der Kontaktflächen 20 im Wesentlichen parallel zu der Haupt-Durchflussrichtung A des Fluids bzw. Mediums durch die Durchflusseinrichtung 10 verläuft bzw. parallel zur Längsrichtung der Durchflusseinrichtung 10 verläuft.

Die Durchflussmesseinrichtung ist derart ausgebildet, dass deren Aufnahme und insbesondere die Ausnehmungen des ersten und zweiten Gehäuseteils im geschlossenen Zustand der Durchflussmesseinrichtung einen Anpressdruck auf die Kontaktflächen 20 ausübt. Die Kontaktflächen 20 weisen dabei eine Materialbeschaffenheit auf, um bei Vorliegen des Anpressdrucks ein bevorzugt flüssiges Kopplungsmittel abzugeben bzw. abzusondern, welches Hohlräume, die zwischen den Kontaktflächen 20 und der Aufnahme bzw. den Ausnehmungen bestehen, befüllt.

Der von der Durchflussmesseinrichtung auf die Kontaktfläche ausgeübte Anpressdruck kann mindestens etwa 0,7 N/mm², bevorzugt mindestens etwa 1 N/mm² und besonders bevorzugt mindestens etwa 1,3 N/mm² betragen. Insbesondere kann der Anpressdruck dadurch ausgeübt werden, indem der Messbereich gegenüber den Ausnehmungen im geschlossenen Zustand der Durchflussmesseinrichtung ein Übermaß aufweist. Beispielsweise kann die Querschnittsfläche des Messbereichs 16 quer zur Durchflussstrecke A größer sein als die Querschnittsfläche, welche von der Aufnahme bzw. den Ausnehmungen der Durchflussmesseinrichtung eingeschlossen wird.

Vorzugsweise können die mindesten zwei Kontaktflächen 20 ein Elastomer und/oder thermoplastisches Elastomer umfassen, wobei optional das thermoplastische Elastomer aus der Gruppe, bestehend aus Polyetherblockamiden (thermoplastische Polyether Block Amide (TPA)), (Co)Polyestern (thermoplastische Copolyester Elastomere (TPC)), Polyurethanen (thermoplastische Polyurethan Elastomere (TPU)), Polyolefinen (thermoplastische Polyolefine (TPO)), vernetzten thermoplastischen Elastomeren (thermoplastische Elastomere aus Thermoplasten und vulkanisiertem Elastomer (TPV)), Styrol-Blockcopolymeren (thermoplastische Elastomere basierend auf Styrol-Blockcopolymeren (TPS)) und Silikonen, einzeln oder in Kombination ausgewählt ist. Das von den Kontaktflächen abgesonderte Kopplungsmittel kann einen flüssigen oder sich unter Druck verflüssigenden äußeren Weichmacher und/oder Extender umfassen. Ferner kann der flüssige oder sich unter Druck verflüssigende äußere Weichmacher und/oder Extender ölartig sein.

Vorzugsweise kann der Messkörper 22 bei Einwirkung des Anpressdrucks im Wesentlichen formstabil sein. Beispielsweise kann der Messkörper 22 aus einem thermoplastischen Kunststoff, insbesondere aus Polybutylenterephthalat, hergestellt sein. Vorteilhafterweise ermöglicht die formstabile Ausgestaltung des Messkörpers 22, dass der Messkörper 22 aufgrund des Anpressdrucks nicht verformt wird, und der auf die Kontaktflächen 20 wirkende Anpressdruck aufrechterhalten werden kann. Der Messkörper 22 kann bevorzugt durch ein Spritzgussverfahren hergestellt werden, wofür sich Polybutylenterephthalat als Material für den Messkörper 22 besonders gut eignet.

Die Kontaktflächen 20 können eine Länge, in Längsrichtung der Durchflusseinrichtung 10 gesehen, von ungefähr 10 mm bis 50 mm aufweisen und eine Breite, quer zur Längsrichtung der Durchflusseinrichtung 10 gesehen, von ungefähr 3 mm bis 20 mm aufweisen. Ferner können die Kontaktflächen 20 eine minimale Dicke von etwa 1,2 mm und/oder eine maximale Dicke von etwa 1,5 mm aufweisen. Der Abstand A1 zwischen zwei gegenüberliegenden Innenseiten des Kanals 24 kann zwischen 2 mm und 12 mm betragen. Des Weiteren kann der Abstand A2 zwischen den Außenseiten von zwei gegenüberliegenden Kontaktflächen 20 zwischen ungefähr 6 mm und 35 mm betragen.

### Bezugszeichenliste

- 10: Durchflusseinrichtung zum Anordnen an einer fluidführenden Leitung
- 12: erster Anschluss
- 14: zweite Anschluss
- 16: Messbereich
- 18: Schlaucholive
- 20: Kontaktflächen
- 22: Messkörper
- 24: Kanal
- A: Durchflussstrecke bzw. Haupt-Durchflussrichtung/Längsrichtung der Durchflusseinrichtung

## Patentansprüche

1. System zur Erfassung einer Messgröße des von einer fluidführenden Leitung geführten Fluids, wobei das System aufweist:
- eine Durchflussmesseinrichtung, insbesondere eine Ultraschall-Durchflussmesseinrichtung, zur Erfassung der Messgröße,
- eine Durchflusseinrichtung (10) zum Anordnen an der fluidführenden Leitung und zum Anbringen der Durchflussmesseinrichtung zur Erfassung der Messgröße des von der Leitung geführten Fluids, wobei die Durchflusseinrichtung aufweist:
- einen ersten und einen zweiten Anschluss (12, 14), mittels derer die Durchflusseinrichtung (10) mit der fluidführenden Leitung verbindbar ist,
- einen zwischen dem ersten Anschluss (12) und dem zweiten Anschluss (14) angeordneten Messbereich (16), der mit der Durchflussmesseinrichtung zum Erfassen der Messgröße koppelbar ist, wobei der erste Anschluss (12), der Messbereich (16) und der zweite Anschluss (14) eine Durchflussstrecke (A) für das Fluid durch die Durchflusseinrichtung (10) festlegen,
wobei der Messbereich (16) mindestens zwei Kontaktflächen (20), die sich zumindest abschnittsweise entlang der Durchflussstrecke (A) erstrecken, zum Kontaktieren der Durchflussmesseinrichtung aufweist,
wobei die mindestens zwei Kontaktflächen (20) dazu ausgelegt sind, bei Einwirken eines Anpressdrucks ein Kopplungsmittel abzusondern, und
wobei die Durchflussmesseinrichtung derart ausgebildet ist, dass durch Kopplung der Durchflussmesseinrichtung mit dem Messbereich (16), die Durchflussmesseinrichtung mindestens den Anpressdruck auf die mindestens zwei Kontaktflächen (20) ausübt.

2. System nach Anspruch 1, wobei die mindestens zwei Kontaktflächen ein Elastomer und/oder thermoplastisches Elastomer umfassen, wobei optional das thermoplastische Elastomer aus der Gruppe, bestehend aus Polyetherblockamiden, (Co)Polyestern, Polyurethanen, Polyolefinen, vernetzten thermoplastischen Elastomeren, Styrol-Blockcopolymeren und Silikonen, einzeln oder in Kombination ausgewählt ist.

3. System nach Anspruch 1 oder 2, wobei der Anpressdruck mindesten etwa 0,7 N/mm², bevorzugt mindestens etwa 1 N/mm² und besonders bevorzugt mindestens etwa 1,3 N/mm² beträgt.

4. System nach Anspruch 1, wobei die Durchflussmesseinrichtung eine Aufnahme für den Messbereich (16) aufweist, wobei in einem geöffneten Zustand der Durchflussmesseinrichtung der Messbereich (16) von der Aufnahme aufnehmbar ist und/oder von der Aufnahme entnehmbar ist, und wobei in einem geschlossenen Zustand der Durchflussmesseinrichtung der Messbereich (16) zumindest abschnittsweise entlang der Durchflussstrecke (A) von der Durchflussmesseinrichtung umschlossen ist.

5. System nach Anspruch 4, wobei der Messbereich (16) quer zur Durchflussstrecke (A) gesehen ein Übermaß gegenüber der Aufnahme im geschlossenen Zustand der Durchflussmesseinrichtung aufweist.

6. System nach einem der vorangegangenen Ansprüche, wobei der Messbereich (16) sechs Kontaktflächen (20) aufweist, die sich zumindest abschnittsweise entlang der Durchflussstrecke (A) erstrecken, wobei die sechs Kontaktflächen (20) derart zueinander angeordnet sind, dass die Durchflusstrecke (A) einen im Wesentlichen hexagonalen Querschnitt, bevorzugt gleichseitigen hexagonalen Querschnitt, aufweist.

7. System nach Anspruch 6, sofern rückbezogen auf Anspruch 4 oder 5, wobei die Aufnahme im geschlossenen Zustand der Durchflussmesseinrichtung einen im Wesentlichen hexagonalen Querschnitt, bevorzugt gleichseitigen hexagonalen Querschnitt, aufweist.

8. System nach einem der vorangegangenen Ansprüche, wobei der Messbereich (16) einen bevorzugt monolithisch ausgebildeten Messkörper (22) aufweist, an dem die Kontaktflächen (20) angebracht sind.

9. System nach einem der vorangegangenen Ansprüche, wobei der Messkörper (22) bei Einwirkung des Anpressdrucks im Wesentlichen formstabil ist, und/oder wobei der Messkörper (22) aus einem thermoplastischen Kunststoff, insbesondere aus Polybutylenterephthalat, hergestellt ist.

10. System nach einem der vorangegangenen Ansprüche, wobei das Kopplungsmittel einen flüssigen oder sich unter Druck verflüssigenden äußeren Weichmacher und/oder Extender umfasst, wobei optional der flüssige oder sich unter Druck verflüssigende äußere Weichmacher und/oder Extender ölartig ist.

11. System nach Anspruch 10, wobei das Kopplungsmittel Weißöl bzw. Paraffin umfasst.

12. System nach einem der vorangegangenen Ansprüche, sofern rückbezogen auf Anspruch 4, wobei die Durchflussmesseinrichtung ein erstes Gehäuseteil und ein zweites Gehäuseteil, welches relativ zu dem ersten Gehäuseteil bewegbar ist, aufweist, und wobei das erste und zweite Gehäuseteil zusammen die Aufnahme für den Messbereich (16) bilden.

13. System nach einem der vorangegangenen Ansprüche, wobei der erste Anschluss (12) und der zweite Anschluss (14) lösbar mit dem Messbereich (16) verbindbar sind.

14. Durchflusseinrichtung (10) zum Anordnen an einer fluidführenden Leitung und zum Anbringen einer Durchflussmesseinrichtung, insbesondere einer Ultraschall-Durchflussmesseinrichtung, zur Erfassung einer Messgröße des von der Leitung geführten Fluids, wobei die Durchflusseinrichtung aufweist:
- einen ersten und einen zweiten Anschluss (12, 14), mittels derer die Durchflusseinrichtung (10) mit der fluidführenden Leitung verbindbar ist,
- einen zwischen dem ersten Anschluss (12) und dem zweiten Anschluss (14) angeordneten Messbereich (16), der mit der Durchflussmesseinrichtung zum Erfassen der Messgröße koppelbar ist, wobei der erste Anschluss (12), der Messbereich (16) und der zweite Anschluss (14) eine Durchflussstrecke (A) für das Fluid durch die Durchflusseinrichtung (10) festlegen,
wobei der Messbereich (16) mindestens zwei Kontaktflächen (20), die sich zumindest abschnittsweise entlang der Durchflussstrecke erstrecken, zum Kontaktieren der Durchflussmesseinrichtung aufweist,
wobei die mindestens zwei Kontaktflächen (20) dazu ausgelegt sind, bei Einwirken eines Anpressdrucks ein Kopplungsmittel abzusondern.

15. Verwendung einer Durchflusseinrichtung (10) nach Anspruch 14 zur Erfassung einer Messgröße des von einer fluidführenden Leitung geführten Fluids, wobei vorgesehen ist:
- Anordnen der Durchflusseinrichtung (10) an der Leitung;
- Anbringen einer Durchflussmesseinrichtung an dem Messbereich (16), wobei durch das Anbringen der Durchflussmesseinrichtung an dem Messbereich (16), die Durchflussmesseinrichtung mindestens den Anpressdruck auf die Kontaktflächen (20) ausübt.
